# EUROPEAN PATENT SPECIFICATION

(11) **EP 4 159 454 B1**
(45) Date of publication and mention of the grant of the patent: **14.05.2025**
(21) Application number: 21812477.4
(22) Date of filing: 12.05.2021
(51) Int. Cl.: B41M 3/14, G02B 5/30, B42D 25/364, G07D 7/12, B42D 25/373, B42D 25/391, G07D 7/202, G07D 7/1205

(54) **AUTHENTICITY DETERMINATION MEMBER AND AUTHENTICITY DETERMINATION METHOD THEREFOR**
ELEMENT ZUR ECHTHEITSBESTIMMUNG UND VERFAHREN ZUR ECHTHEITSBESTIMMUNG DAFÜR
ÉLÉMENT DE DÉTERMINATION D'AUTHENTICITÉ ET PROCÉDÉ DE DÉTERMINATION D'AUTHENTICITÉ S'Y RAPPORTANT

(30) Priority: 28.05.2020 JP 2020093633
(43) Date of publication of application: 05.04.2023
(73) Proprietor: Zeon Corporation, Tokyo 100-8246 (JP)
(72) Inventor: HARAI, Kenichi, Tokyo 100-8246 (JP)
(74) Representative: Maiwald GmbH
(86) International application number: PCT/JP2021/018013
(87) International publication number: WO 2021/241226

(56) References cited:
- WO-A1-2008/032411
- WO-A1-2020/004155
- CN-A- 101 088 113
- JP-A- 2000 255 200
- JP-A- 2004 338 257
- JP-A- 2013 008 113
- JP-A- 2013 008 113
- JP-A- 2014 141 057
- JP-A- 2014 174 471
- KR-B1- 101 055 015
- US-A1- 2012 262 767
- US-A1- 2012 308 072
- US-A1- 2020 049 871

## Description

### Field

The present invention relates to an authenticity determining member and a method for determining authenticity thereof.

### Background

As a measure for preventing counterfeiting of valuable articles, there have been known mediums observation of which from the front and back results in visual recognition of different images. Patent Literature 1 discloses a medium obtained by forming, on a front side of a substrate having a function of transmitting one of counterclockwise circularly polarized light and clockwise circularly polarized light, a print image formed from a cholesteric liquid crystal material having a property of reflecting a circularly polarized light of rotating direction that is opposite to the circularly polarized light that can be transmitted through the substrate, and a print image formed from a material not having such a property. Patent Literature 2 and 3 describe further identification media, articles equipped therewith and methods for determining authenticity thereof.

### Citation List

### Patent Literature

Patent Literature 1: JP 2013-008113 A
Patent Literature 2: CN 101 088 113 A
Patent Literature 3: WO 2020/004155 A1

### Summary

### Technical Problem

When, as the material not having the property of reflecting the circularly polarized light of rotating direction that is opposite to the circularly polarized light that can be transmitted through the substrate, a material containing a metal pigment is used to form a print layer, the technique in Patent Literature 1 may decrease the degree of freedom of expression by the print layer. This is because a metallic-colored reflected image based on the print layer is not observed and a mere black image is observed when such a print layer is observed from the back side of the medium (i.e., a side opposite to the surface of the substrate having the print layer). Such a decrease in degree of freedom of expression may make it difficult to determine the authentication of the medium.

Therefore, there are demands for an authenticity determining member that has a print layer containing a metal pigment and has different reflected images when observed from the front and back; and a method for determining authenticity of the authenticity determining member.

### Solution to Problem

The present inventor has intensively studied to solve the aforementioned problems. As a result, the inventor has found that the problems can be solved by using as a reflective circular polarizer a substrate layer of an authenticity determining member and providing a first print layer containing a resin pigment that includes flakes of a resin layer having cholesteric regularity and a second print layer containing a metal pigment on the substrate, to thereby completed the present invention.

The scope of the invention is defined in the appended claims.

### Advantageous Effects of Invention

The present invention provides an authenticity determining member that has a print layer containing a metal pigment and has different reflected images when observed from the front and back; and a method for determining authenticity of the authenticity determining member.

### Brief Description of Drawings

FIG. 1 is a schematic plan view of an authenticity determining member according to an embodiment of the present invention as viewed in a thickness direction.
FIG. 2 is a schematic cross-sectional view taken along line II-II in FIG. 1.
FIG. 3 is an illustration view for the authenticity determining member according to the embodiment of the present invention when observed from a main surface side of the authenticity determining member.
FIG. 4 is an illustration view for the authenticity determining member according to the embodiment of the present invention when observed from another main surface side of the authenticity determining member.
FIG. 5 is a schematic view illustrating an image observed when the authenticity determining member according to the embodiment of the present invention is irradiated with unpolarized light.
FIG. 6 is a schematic view illustrating an image observed when the authenticity determining member according to the embodiment of the present invention in FIG. 5 is flipped and irradiated with unpolarized light.
FIG. 7 is a schematic plan view of an authenticity determining member according to Comparative Example as viewed in a thickness direction.
FIG. 8 is a schematic cross-sectional view taken along line VIII-VIII in FIG. 7.
FIG. 9 is an illustration view for the authenticity determining member according to Comparative Example when observed from a main surface side of the authenticity determining member.
FIG. 10 is an illustration view for the authenticity determining member according to Comparative Example when observed from another main surface side of the authenticity determining member.

### Description of Embodiments

Hereinafter, the present invention will be described in detail with reference to embodiments and examples.

Elements illustrated in common in a plurality of drawings may be given the same reference numerals, and descriptions thereof may be omitted.

In the following description, a slow axis of a film or layer represents an in-plane slow axis of the film or layer, unless otherwise specified.

In the following description, the term "(meth)acryloyl" encompasses "acryloyl", "methacryloyl", and a combination of these.

In the following description, a direction of an element being "parallel", "perpendicular" or "orthogonal" may allow an error within the range of not impairing the advantageous effects of the present invention, for example, within a range of ±3°, ±2°, or ±1° unless otherwise specified.

In the following description, the circularly polarized light includes elliptically polarized light.

In the following description, the visible wavelength band means the wavelength range of visible light and means the range of the wavelength of 380 nm or longer and 830 nm or shorter.

In the following description, a "λ/4 plate" includes not only a rigid member but also a flexible member such as a resin film, unless otherwise specified.

### (1. Authenticity determining member)

The authenticity determining member according to an embodiment of the present invention includes a substrate layer, a first print layer provided on the substrate layer, and a second print layer provided on the substrate layer. The aforementioned substrate layer is a reflective circular polarizer. The aforementioned first print layer contains a resin pigment that includes flakes of a resin layer A1 having cholesteric regularity. The aforementioned second print layer contains a metal pigment having no circularly polarized light separation function.

### (1.1. Substrate layer)

The substrate layer is a reflective circular polarizer. The reflective circular polarizer means a polarizer having a function capable of reflecting one of circularly polarized light having a clockwise rotation direction and circularly polarized light having a counterclockwise rotation direction and transmitting the other. Such a function is referred to as a circularly polarized light separation function.

The reflective circular polarizer may be a multilayer body containing a substrate film or the like. Examples of the reflective circular polarizer may include (1) a resin layer having cholesteric regularity, and (2) a multilayer body including a reflective linear polarizer, a first λ/4 plate provided on a main surface of the aforementioned reflective linear polarizer, and a second λ/4 plate provided on another main surface of the aforementioned reflective linear polarizer (a multilayer body in which the λ/4 plates are provided on both surfaces of the reflective linear polarizer). The substrate layer is preferably a layer including a resin layer having cholesteric regularity, and more preferably the substrate layer is a resin layer having cholesteric regularity.

Herein, the cholesteric regularity is a structure in which the angles of molecular axes in stacking planes are shifted (twisted) as the planes are observed sequentially passing through the stacked planes, such that molecular axes in a first plane are oriented in a certain direction, molecular axes in a subsequent plain stacking on the first plane are oriented in a direction shifted by a small angle with respect to that of the first plane, and molecular axes in still another plane are oriented in a direction of a further shifted angle. That is, when molecules in the layer have cholesteric regularity, the molecules are aligned in a manner such that multiple molecular layers are formed in the resin layer. In a certain layer A among such multiple molecular layers, molecules are aligned in such a manner that axes of the molecules are directed in a certain direction. In the neighboring layer B, molecules are aligned in a direction that is shifted to form an angle with the direction in the layer A. In the further neighboring layer C, molecules are aligned in a direction that is further shifted to form an angle with the direction in the layer B. Thus, in the multiple molecular layers, the angles of the axes of the molecules are continuously shifted to form a structure in which molecules are twisted. Such a structure wherein the directions of the molecular axes are sequentially twisted constitutes an optically chiral structure.

Hereinafter, the resin layer having cholesteric regularity that can constitute the substrate layer is also referred to as a cholesteric resin layer or a resin layer A2. In the cholesteric resin layer, circularly polarized light is reflected while the chirality thereof is maintained.

It is preferable that the reflectance of the cholesteric resin layer at at least one wavelength in the visible wavelength band is 40% or more. By having such a feature, a reflected image observed when unpolarized light is made incident on the authenticity determining member is made clear, and the authenticity of the authenticity determining member is easily determined. The reflectance of the cholesteric resin layer is usually 50% or less.

It is preferable that the half band width of the reflection band whose reflectance of the cholesteric resin layer is 35% or more and 50% or less is preferably 350 nm or more. When the cholesteric resin layer exhibits the circularly polarized light separation function in a wide wavelength range, authenticity determination of the authenticity determining member can be performed in the wide wavelength range. In addition, the color of the reflected light by the cholesteric resin layer can be a color closer to metallic white (silver), and the degree of freedom of design can be increased. The upper limit of the half band width is not particularly limited, and may be a width over the entire visible light band. For example, the upper limit of the half band width may be 500 nm or less or 400 nm or less.

The wavelength exhibiting the circularly polarized light separation function generally depends on the pitch of a helical structure in the cholesteric resin layer. The pitch of the helical structure is the distance in the plane normal direction in the helical structure from an original plane to another plane in which the angle of the direction of the molecular axis that has been gradually and continuously shifted as proceeding through the planes from the original plane returns to the original molecular axis direction again. By changing the degree of this pitch of the helical structure, the wavelength for exerting a circular polarized light separation function can be changed. Examples of the cholesteric resin layer that can exhibit the circularly polarized light separation function in a wide wavelength range such as the cholesteric resin layer having a half band width of reflection band of 350 nm or more may include (i) a cholesteric resin layer in which the degree of the pitch of the helical structure is changed in a stepwise manner, and (ii) a cholesteric resin layer in which the degree of the pitch of the helical structure is changed in a continuous manner.

The cholesteric resin layer may be obtained by, for example, providing a film of a cholesteric liquid crystal composition on an appropriate support for formation of a resin layer and curing the film of the cholesteric liquid crystal composition. The obtained layer as it is may be used as the cholesteric resin layer.

As the cholesteric liquid crystal composition for forming the cholesteric resin layer, for example, a composition containing a liquid crystal compound and capable of exhibiting a cholesteric liquid crystal phase when the film thereof is formed on a support may be used. Herein, as the liquid crystal compound, a liquid crystal compound which is a polymer compound and a polymerizable liquid crystal compound may be used. The cholesteric liquid crystal composition may solely contain one type of the liquid crystal compound, and may also contain any combination of two or more types thereof.

In order to obtain high thermal stability, a polymerizable liquid crystal compound is preferably used. By polymerizing such a polymerizable liquid crystal compound while being in a state of exhibiting cholesteric regularity, the film of the cholesteric liquid crystal composition is cured, and a non-liquid crystal resin layer cured while exhibiting cholesteric regularity can be obtained.

Examples of the polymerizable liquid crystal compound may include a rod-like liquid crystal compound represented by the following general formula (1):

R¹-C¹-D¹-C³-M-C⁴-D²-C²-R² (1).

In the general formula (1), R¹ and R² each independently represent a polymerizable functional group.

Examples of the polymerizable functional group may include a carboxyl group, a (meta)acryloyl group, an epoxy group, a thioepoxy group, a mercapto group, an isocyanate group, an isothiocyanate group, an oxetanyl group, a thiethanyl group, an aziridinyl group, a pyrrole group, a vinyl group, an aryl group, a fumarate group, a cinnamoyl group, an oxazoline group, a hydroxyl group, an alkoxysilyl group, and an amino group.

In the general formula (1), D¹ and D² each independently represent a group selected from the group consisting of a single bond, a divalent saturated hydrocarbon group such as a linear or branched methylene or alkylene group of 1 to 20 carbon atoms, and a linear or branched alkylene oxide group of 1 to 20 carbon atoms.

In the general formula (1), C¹ to C⁴ each independently represent a group selected from the group consisting of a single bond, -O-, -S-, -S-S-, -CO-, -CS-, - OCO-, -CH₂-, -OCH₂-, -CH=N-N=CH-, -NHCO-, -OCOO-, -CH₂COO-, and -CH₂OCO-.

In the general formula (1), M represents a mesogen group. As specific examples thereof, M represents a group obtained by bonding two to four skeletons selected from the group consisting of azomethines, azoxies, phenyls, biphenyls, terphenyls, naphthalenes, anthracenes, benzoic acid esters, cyclohexanecarboxylic acid phenyl esters, cyanophenylcyclohexanes, cyano-substituted phenylpyrimidines, alkoxy-substituted phenylpyrimidines, phenyldioxanes, tolanes, and
alkenylcyclohexylbenzonitriles, which may or may not have a substituent, by a bonding group such as -O-, -S-, -S-S-,-CO-, -CS-, -OCO-, -CH₂-, -OCH₂-, -CH=N-N=CH-, -NHCO-,-OCOO-, -CH₂COO-, and -CH₂OCO-.

Examples of the substituents which the mesogen group M may have may include a halogen atom, an alkyl group of 1 to 10 carbon atoms optionally having a substituent, a cyano group, a nitro group, -O-R³, -O-C(=O)-R³, -C(=O)-O-R³, -O-C(=O)-O-R³, -NR³-C(=O)-R³, -C(=O)-NR³R⁴, and -O-C(=O)-NR³R⁴.

Herein, R³ and R⁴ represent a hydrogen atom or an alkyl group of 1 to 10 carbon atoms. When R³ and R⁴ are an alkyl group, the alkyl group may have an intervening -O-,-S-, -O-C(=O)-, -C(=O)-O-, -O-C(=O)-O-, -NR⁵-C(=O)-, -C(=O)-NR⁵-, -NR⁵-, or -C(=O)- (with a proviso that cases where two or more adjacent -O-'s or -S-'s are present as an intervening group are excluded). Herein, R⁵ represents a hydrogen atom or an alkyl group of 1 to 6 carbon atoms. Examples of the substituents in the above-mentioned "alkyl group of 1 to 10 carbon atoms optionally having a substituent" may include a halogen atom, a hydroxyl group, a carboxyl group, a cyano group, an amino group, an alkoxy group of 1 to 6 carbon atoms, an alkoxyalkoxy group of 2 to 8 carbon atoms, an alkoxyalkoxyalkoxy group of 3 to 15 carbon atoms, an alkoxycarbonyl group of 2 to 7 carbon atoms, an alkylcarbonyloxy group of 2 to 7 carbon atoms, and an alkoxycarbonyloxy group of 2 to 7 carbon atoms.

Preferable specific examples of the rod-like liquid crystal compound may include the following compounds (B1) to (B10). As these compounds, one type thereof may be solely used, and two or more types thereof may also be used in combination at any ratio.

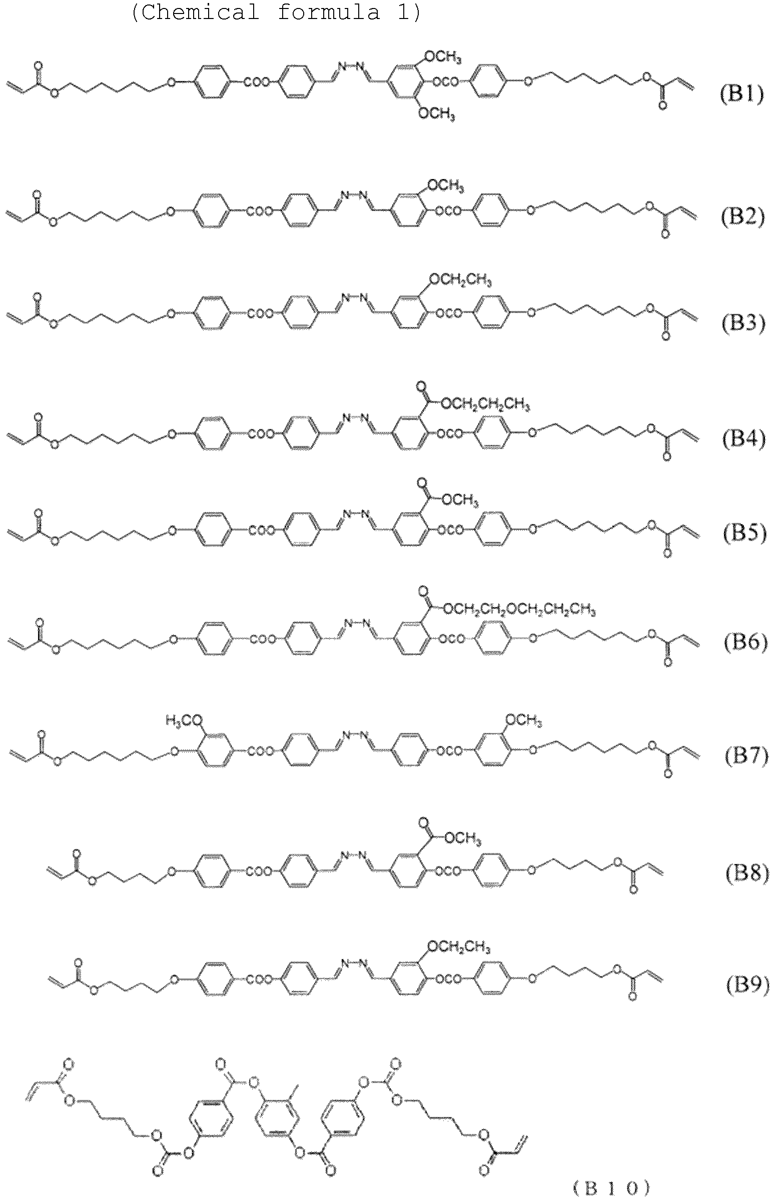

The concentration of the liquid crystal compound in the cholesteric liquid crystal composition is not particularly limited, and is preferably 5% by weight or more, more preferably 10% by weight or more, still more preferably 14% by weight or more, and particularly preferably 15% by weight or more, and is preferably 40% by weight or less, more preferably 35% by weight or less, and still more preferably 30% by weight or less.

The cholesteric liquid crystal composition may include an orientation aid for assisting the orientation of the liquid crystal compound. The orientation aid may be a material having no liquid crystallizability.

Examples of the orientation aid may include a compound represented by the following general formula (2):

R⁶-A¹-Z-A²-R⁷ (2).

In the general formula (2), R⁶ and R⁷ are each independently selected from the group consisting of a linear or branched alkyl group of 1 to 20 carbon atoms, a linear or branched alkylene oxide group of 1 to 20 carbon atoms, a hydrogen atom, a halogen atom, a hydroxyl group, a carboxyl group, a (meta)acryloyl group which may include an optional bonding group as an intervening group, an epoxy group, a mercapto group, an isocyanate group, an amino group, and a cyano group.

The alkyl group and the alkylene oxide group may be unsubstituted or substituted with one or more halogen atoms. Furthermore, when two or more substituents are present in each of the alkyl group and the alkylene oxide group, they may be the same as or different from each other.

The halogen atom, hydroxyl group, carboxyl group, (meta)acryloyl group, epoxy group, mercapto group, isocyanate group, amino group, and cyano group may be bonded to an alkyl group of 1 to 2 carbon atoms and an alkylene oxide group.

Preferable examples of R⁶ and R⁷ may include a halogen atom, a hydroxyl group, a carboxyl group, a (meth)acryloyl group, an epoxy group, a mercapto group, an isocyanate group, an amino group, and a cyano group.

It is preferable that at least one of R⁶ and R⁷ is a polymerizable functional group. When the compound of the general formula (2) has a polymerizable functional group as R⁶ and/or R⁷, the compound is fixed in the liquid crystal layer at the time of curing, so that a liquid crystal cured product layer which is a stronger film can be formed. Herein, examples of the polymerizable functional group may include the same compounds as that for the polymerizable liquid crystal compound. Among these, a carboxyl group, a (meth)acryloyl group, an epoxy group, a mercapto group, an isocyanate group, and an amino group are preferable.

In the general formula (2), A¹ and A² each independently represent a group selected from the group consisting of a 1,4-phenylene group, a 1,4-cyclohexylene group, a cyclohexene-1,4-diyl group, a 4,4'-biphenylene group, a 4,4'-bicyclohexylene group, and a 2,6-naphthylene group. The 1,4-phenylene group, 1,4-cyclohexylene group, cyclohexene-1,4-diyl group, 4,4'-biphenylene group, 4,4'-bicyclohexylene group, and 2,6-naphthylene group may not be substituted or may be substituted with one or more substituents such as a halogen atom, a hydroxyl group, a carboxyl group, a cyano group, an amino group, an alkyl group of 1 to 10 carbon atoms, and a halogenated alkyl group. Furthermore, when two or more substituents are present in each of A¹ and A², they may be the same as, or different from, each other.

Particularly preferable examples as A¹ and A² may include a 1,4-phenylene group, a 4,4'-biphenylene group, and a 2,6-naphthylene group. These aromatic ring skeletons are relatively rigid compared to alicyclic skeletons, and the affinity of the groups to mesogens of the polymerizable liquid crystal compound is high and orientation uniformity becomes higher.

In the general formula (2), Z is selected from the group consisting of a single bond, -O-, -S-, -S-S-,-CO-, -CS-, -OCO-, -CH₂-, -OCH₂-, -CH=N-N=CH-, -NHCO-,-OCOO-, -CH₂COO-, and -CH₂OCO-. Particularly preferable examples as Z may include a single bond, -OCO-, and -CH=N-N=CH-.

Particularly preferable specific examples of the compound represented by the general formula (2) may include the following compounds (A1) to (A10). In the compound (A3), "*" represents a chiral center.

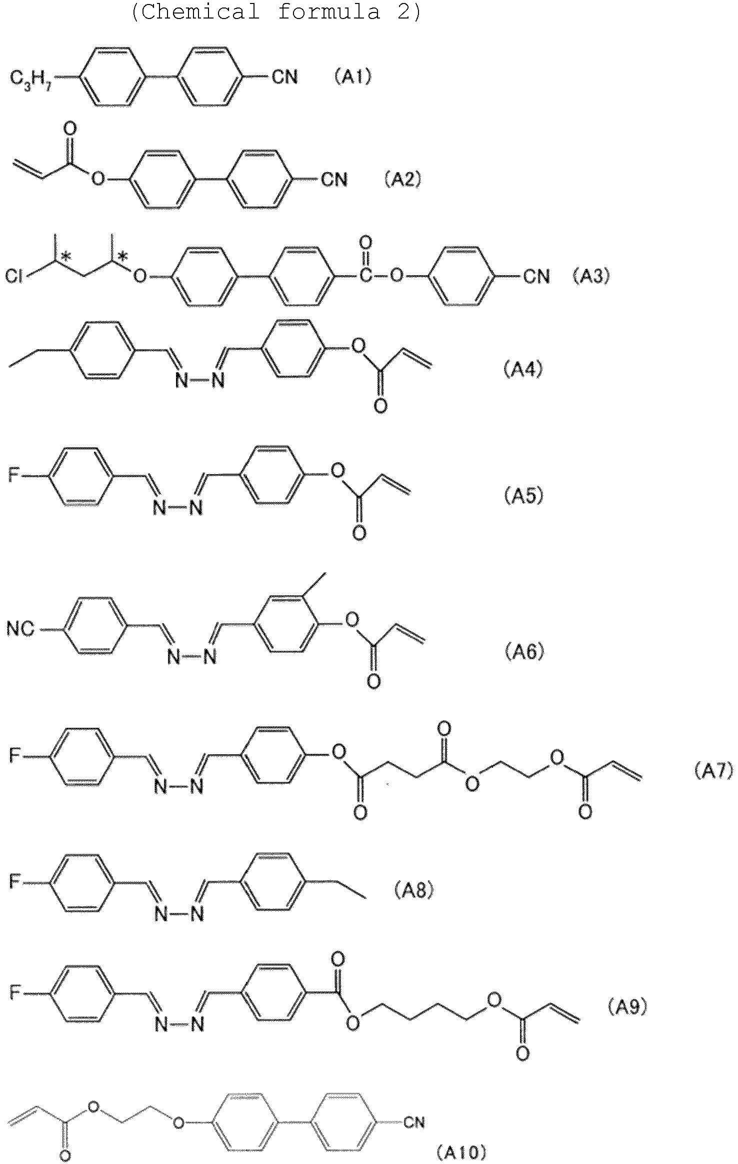

The cholesteric liquid crystal composition may contain a chiral agent, and preferably contains a chiral agent. Usually, the twist direction of the cholesteric resin layer may be appropriately selected depending on the type and structure of the chiral agent used. In a case where clockwise twist is desired, use of a chiral agent for imparting dextrorotation can realize such twist. In a case where counterclockwise twist is desired, use of a chiral agent for imparting levorotation can realize such twist. Specific examples of the chiral agent that can appropriately be used may include those described in JP 2005-289881 A, JP 2004-115414 A, JP 2003-66214 A, JP 2003-313187 A, JP 2003-342219 A, JP 2000-290315 A, JP 6-072962 A, US 6468444, WO 98/00428, JP 2007-176870 A and the like, and they are available as Paliocolor LC756 available from BASF, for example. As the chiral agents, one type thereof may be solely used, and two or more types thereof may also be used in combination at any ratio.

The amount of the chiral agent may be optionally set within a range in which the chiral agent does not decrease the desired optical performance. The specific amount of the chiral agent is usually 1% by weight to 60% by weight in the cholesteric liquid crystal composition.

The cholesteric liquid crystal composition may contain a polymerization initiator.

Examples of the polymerization initiator may include a photopolymerization initiator. As the photopolymerization initiator, for example, a publicly known compound that generates a radical or an acid by ultraviolet or visible light may be used.

Specific examples of the photopolymerization initiator may include benzoin, benzyl dimethyl ketal, benzophenone, biacetyl, acetophenone, Michler's ketone, benzyl, benzyl isobutyl ether, tetramethyl thiuram mono(di)sulfide, 2,2-azobisisobutyronitrile, 2,2-azobis-2,4-dimethylvaleronitrile, benzoyl peroxide, di-tert-butyl peroxide, 1-hydroxycyclohexyl phenyl ketone, 2-hydroxy-2-methyl-1-phenyl-propane-1-one, 1-(4-isopropylphenyl)-2-hydroxy-2-methylpropane-1-one, thioxanthone, 2-chlorothioxanthone, 2-methylthioxanthone, 2,4-diethylthioxanthone, methylbenzoylformate, 2,2-diethoxyacetophenone, β-ionone, β-bromostyrene, diazoaminobenzene, α-amylcinnamic aldehyde, p-dimethylaminoacetophenone, p-dimethylaminopropiophenone, 2-chlorobenzophenone, p,p'-dichlorobenzophenone, p,p'-bisdiethylaminobenzophenone, benzoin ethyl ether, benzoin isopropyl ether, benzoin n-propyl ether, benzoin n-butyl ether, diphenyl sulfide, bis(2,6-methoxybenzoyl)-2,4,4-trimethyl-pentylphosphine oxide, 2,4,6-trimethylbenzoyldiphenyl-phosphine oxide, bis(2,4,6-trimethylbenzoyl)-phenylphosphine oxide, 2-methyl-1(4-(methylthio)phenyl)-2-morpholinopropane-1-one, 2-benzyl-2-dimethylamino-1-(4-morpholinophenyl)-butane-1-one, anthracene benzophenone, α-chloroanthraquinone, diphenyldisulfide, hexachlorobutadiene, pentachlorobutadiene, octachlorobutene, 1-chlormethylnaphthalene, carbazoleoxime compounds such as 1,2-octanedione-1-(4-(phenylthio)phenyl-2-(o-benzoyloxime)) and 1-(9-ethyl-6-(2-methylbenzoyl)-9H-carbazol-3-yl)ethanone 1-(o-acetyloxime), (4-methylphenyl) (4-(2-methylpropyl)phenyl)iodonium hexafluorophosphate, 3-methyl-2-butynyltetramethylenesulfonium hexafluoroantimonate, and diphenyl-(p-phenylthiophenyl)sulfonium hexafluoroantimonate.

As a commercially available product, for example, Irgacure OXE02 manufactured by BASF may be used.

As the polymerization initiator, one type thereof may be solely used, and two or more types thereof may also be used in combination at any ratio.

The cholesteric liquid crystal composition may include a surfactant. As the surfactant for use, for example, those which do not inhibit the orientation may be appropriately selected. Preferable examples of such a surfactant may include a nonionic surfactant containing a siloxane or a fluorinated alkyl group in a hydrophobic group moiety. Among these, an oligomer having two or more hydrophobic group moieties in one molecule is particularly suitable. Specific examples of these surfactants may include PolyFox PF-151N, PF-636, PF-6320, PF-656, PF-6520, PF-3320, PF-651, and PF-652 available from OMNOVA Solutions Inc.; Ftergent FTX-209F, FTX-208G, and FTX-204D available from Neos Co., Ltd.; and Surflon KH-40 and S420 available from AGC Seimi Chemical Co., Ltd.

As the surfactants, one type thereof may be solely used, and two or more types thereof may also be used in combination at any ratio.

The cholesteric liquid crystal composition may optionally contain a crosslinking agent for improving film strength and durability after curing. As the crosslinking agent for use, those which can increase the crosslinking density of the cholesteric resin layer, and which do not prevent deterioration of the orientation uniformity may be appropriately selected. Such an increase in the crosslinking density can be achieved by a reaction that occurs simultaneously with the curing during the curing of the film of the liquid crystal composition, by accelerating the reaction by performing a heat treatment after the curing, or by a reaction that proceeds spontaneously due to moisture. Therefore, for example, a freely selected crosslinking agent which allows the composition to cure with ultraviolet rays, heat, moisture, or the like may be suitably used.

Examples of the crosslinking agent may include a polyfunctional acrylate compound; an aziridine compound; an isocyanate compound; a polyoxazoline compound having an oxazoline group on a side chain; and an alkoxysilane compound. As the crosslinking agent, one type thereof may be solely used, and two or more types thereof may also be used in combination at any ratio.

The cholesteric liquid crystal composition may further contain other optional components if necessary. Examples of the optional components may include a solvent, a polymerization inhibitor for improving pot life, an antioxidant for improving durability, an ultraviolet absorber, and a light stabilizer. As the optional components, one type thereof may be solely used, and two or more types thereof may also be used in combination at any ratio. The amount of these optional components may be freely set within a range in which the optional components do not decrease the desired optical performance.

The method for producing the cholesteric liquid crystal composition is not particularly limited, and the composition may be produced by mixing the above-mentioned components.

After the above-mentioned photocurable cholesteric liquid crystal composition is prepared, a film of the liquid crystal composition is provided on a substrate film. Usually, the film of the liquid crystal composition is formed by application of the liquid crystal composition onto the surface of a substrate film. When the substrate film has an orientation film, the film of the liquid crystal composition is usually provided on the orientation film. Furthermore, before applying the liquid crystal composition, the surface of the substrate film may be subjected to a treatment such as a corona discharge treatment and a rubbing treatment, if necessary.

After the film of the liquid crystal composition is provided on the substrate film, an orientation treatment may be performed if necessary. The orientation treatment may be performed, for example, by warming the film of the liquid crystal composition at 50°C to 150°C for 0.5 minute to 10 minutes. By subjecting the film to the orientation treatment, the liquid crystal composition in the film can be well oriented.

After that, a curing treatment is usually performed in order to cure the film of the liquid crystal composition. The curing treatment may be performed by a combination of light irradiation and a warming treatment once or more times.

The warming condition may be at a temperature of, for example, preferably 40°C or higher, more preferably 50°C or higher, and preferably 200°C or lower, more preferably 140°C or lower, and for a time of preferably 1 second or longer, more preferably 5 seconds or longer, and also preferably 3 minutes or shorter, more preferably 120 seconds or shorter.

The light used for light irradiation includes not only visible light but also ultraviolet light and other electromagnetic waves. The light irradiation may be performed, for example, by irradiating light with a wavelength of 200 nm to 500 nm for 0.01 second to 3 minutes. In this case, for example, the energy of light irradiation may be 0.01 mJ/cm² to 50 mJ/cm².

By a plurality of times of repetition of the alternate weak UV irradiation at 0.01 mJ/cm² to 50 mJ/cm² and heating, it is possible to cause great degree of continuous alteration of the pitch of the helical structures to thereby obtain a cholesteric resin layer having a circularly polarized light separating function with a wide reflection bandwidth. Furthermore, after performing the broadening of the reflection bandwidth by the above-mentioned weak ultraviolet ray irradiation or the like, irradiation with relatively strong ultraviolet rays such as at 50 mJ/cm² to 10,000 mJ/cm² may be performed to completely polymerize the liquid crystal composition, for obtaining a cholesteric resin layer having a high mechanical strength. The broadening of the reflection bandwidth and the irradiation of strong ultraviolet rays described above may be performed in the air, or some or all of the processes thereof may be performed in an atmosphere in which the oxygen concentration is controlled (e.g., under a nitrogen atmosphere).

The process of applying and curing the liquid crystal composition as described above is performed not only one time, but also the application and curing may be repeated a plurality of times, thereby forming the cholesteric resin layer including two or more layers. However, when the liquid crystal composition described in the aforementioned example is used, it is possible to easily form a cholesteric resin layer which contains a well-oriented rod-like liquid crystal compound and which has a thickness of 5 µm or more even by only one application and curing of the liquid crystal composition.

As the reflective circular polarizer, as described above, a multilayer body including (2) a reflective linear polarizer, a first λ/4 plate, and a second λ/4 plate may be used. Examples of the reflective linear polarizer included in such a multilayer body may include a wire-grid linear polarizer and a multilayer reflective linear polarizer (e.g., "DBEF" manufactured by 3M) .

The thickness of the substrate layer is not particularly limited, and is preferably 3.0 µm or more, more preferably 4.0 µm or more, and particularly preferably 4.5 µm or more, and is preferably 20 µm or less, more preferably 15 µm or less, and particularly preferably 10 µm or less.

### (1.2. First print layer)

The resin pigment contained in the first print layer includes flakes of the resin layer having cholesteric regularity. The resin pigment may be produced by forming the resin layer having cholesteric regularity (this may be referred to hereinafter as a resin layer A1) and crushing the layer into flakes.

The resin layer A1 may be obtained by, for example, providing a film of a cholesteric liquid crystal composition on an appropriate support for formation of a resin layer and curing the film of the cholesteric liquid crystal composition, like the resin layer A2 having cholesteric regularity as the substrate layer. Examples of the cholesteric liquid crystal composition used to form the cholesteric resin layer may include the examples and preferable examples that are the same as those of the cholesteric liquid crystal composition for forming the resin layer A2.

It is preferable that the reflectance of the resin layer A1 at at least one wavelength in the visible wavelength band is 40% or more. By having such a feature, a reflected image observed when unpolarized light is made incident on the authenticity determining member is made clear, and the authenticity of the authenticity determining member is easily determined. The reflectance of the resin layer A1 is usually 50% or less.

It is preferable that the half band width of the reflection band whose reflectance of the resin layer A1 is 35% or more and 50% or less is 350 nm or more. When the resin layer A1 exhibits the circularly polarized light separation function in a wide wavelength range, authenticity determination of the authenticity determining member can be performed in the wide wavelength range. In addition, the color of the reflected light in the first print layer containing the resin pigment including the flakes of the resin layer A1 can be a color closer to metallic white (silver), and the degree of freedom of design can be increased.

The thickness of the resin layer A1 is not particularly limited, and is preferably 3.0 µm or more, more preferably 4.0 µm or more, and particularly preferably 4.5 µm or more, and is preferably 20 µm or less, more preferably 15 µm or less, and particularly preferably 10 µm or less.

The resin layer A2 and the resin layer A1 may be the same layer formed from the same cholesteric liquid crystal composition by the same method, or may be different layers from each other.

It is preferable that the resin layer A2 and the resin layer A1 have cholesteric regularity in the same twisting direction. The twisting directions of cholesteric regularity in the resin layer A2 and the resin layer A1 can be made same by, for example, appropriately selecting the type and structure of the chiral agent used for the cholesteric liquid crystal composition for formation of the resin layer A2 or the resin layer A1.

Examples of the method for producing the resin pigment from the resin layer A1 may include a method in which the resin layer A1 is formed on the substrate film and then peeled from the substrate film to obtain a resin layer piece, and the resin layer piece is used as it is or is further grinded by a grinder or the like to obtain the resin pigment that includes the flakes of the resin layer A2. Specific examples thereof may include a method described in Japanese Patent Application Laid-Open No. 2015-027743 A.

The size of the flakes contained in the resin pigment may optionally be set in accordance with a printing method for forming the first print layer, or the like. When the first print layer is formed by a screen printing method, the flakes for the resin pigment may preferably be flakes that passed through a sieve having an opening of 100 µm or less, and more preferably flakes that passed through a sieve having an opening of 60 µm or less. The flakes for the resin pigment may preferably be flakes that do not pass through a sieve having an opening of less than 5 µm.

The first print layer may be provided on the substrate layer by any method. It is preferable that the first print layer is provided on the substrate layer by a printing method. Herein, the "printing method" includes a method for applying an ink onto the substrate layer without a printing plate, such as an ink jet printing method, in addition to a method for transferring an ink to the substrate layer with a printing plate.

In particular, it is preferable that the first print layer is provided on the substrate layer by a screen printing method.

The first print layer containing the resin pigment may be formed by, for example, transferring or applying an ink containing the resin pigment onto the substrate layer.

The containing amount of the resin pigment in the ink is not particularly limited, and may be, for example, 1% by weight or more, for example, 5% by weight or more, for example, 15% by weight or less, for example, 10% by weight or less.

The ink containing the resin pigment may contain optional components in addition to the resin pigment. Examples of the optional components contained in the ink may include a solvent (including a dispersion medium), a binder resin, an antifoaming agent, a stabilizer, a wax, and a surfactant.

Examples of the binder resin may include a thermosetting resin and a photocurable resin.

The thickness of the first print layer is not particularly limited, and may be optionally set in accordance with a printing method for forming the first print layer, and is, for example, 30 µm to 50 µm.

It is preferable that the first print layer is provided so as to be in contact with a portion of one main surface of the substrate layer, and forms a pattern when viewed in the thickness direction of the authenticity determining member. Examples of the pattern may include, but are not limited to, a graphic such as a square or a triangle, and a character.

### (1.3. Second print layer)

The second print layer contains a metal pigment having no circularly polarized light separation function. Having no circularly polarized light separation function means that, among circularly polarized light, circularly polarized light having a clockwise rotation direction and circularly polarized light having a counterclockwise rotation direction are reflected at the same reflectance and transmitted at the same transmittance (the transmittance may be 0%). The metal pigment is usually a material exhibiting metal gloss. The metal pigment includes a material having no circularly polarized light separation function. Since metal powder generally has no circularly polarized light separation function, the metal powder may be used as the metal pigment which the second print layer can contain. A metal oxide such as silica may also be used as a material for the metal pigment.

Examples of the material for the metal pigment may include aluminum, copper, silver, and silica. Powders and flakes of these materials may be used as the metal pigment. Flakes obtained by forming a film of a metal oxide of, e.g., metal or silica on the surface of flakes made of a material other than metal, such as glass flakes, may also be used as the metal pigment.

The size of the metal pigment may optionally be set in accordance with a printing method for forming the second print layer, or the like. When the second print layer is formed by a screen printing method, the flakes for the metal pigment may preferably be flakes that passed through a sieve having an opening of 100 µm or less, and more preferably flakes that passed through a sieve having an opening of 60 µm or less. The flakes for the metal pigment may preferably be flakes that do not pass through a sieve having an opening of less than 5 µm.

It is preferable that the second print layer is provided on the substrate layer by a printing method. In particular, it is preferable that the second print layer is provided by a screen printing method.

The second print layer containing the metal pigment may be formed by, for example, transferring or applying an ink containing the metal pigment onto the substrate layer.

The ink containing the metal pigment may contain optional components in addition to the metal pigment. Examples of the optional components contained in the ink may include the same components as those that may be contained in the ink containing the resin pigment.

The thickness of the second print layer is not particularly limited, and may be optionally set in accordance with a printing method for forming the second print layer, and is, for example, 30 µm to 50 µm.

It is preferable that the second print layer is provided so as to be in contact with a portion of one main surface of the substrate layer, and forms a pattern when viewed in the thickness direction of the authenticity determining member. Examples of the pattern may include, but are not limited to, a graphic such as a square or a triangle, and a character. The first print layer and the second print layer may have the same pattern or different patterns.

It is preferable that the first print layer and the second print layer are provided so as not to overlap each other when viewed in the thickness direction of the authenticity determining member.

The second print layer may be provided on the same main surface as the main surface of the substrate layer on which the first print layer is provided, or may be provided on a main surface different from the main surface of the substrate layer on which the first print layer is provided. In an embodiment, the second print layer is provided on the same main surface as the main surface of the substrate layer on which the first print layer is provided.

### (1.4. Action of authenticity determining member)

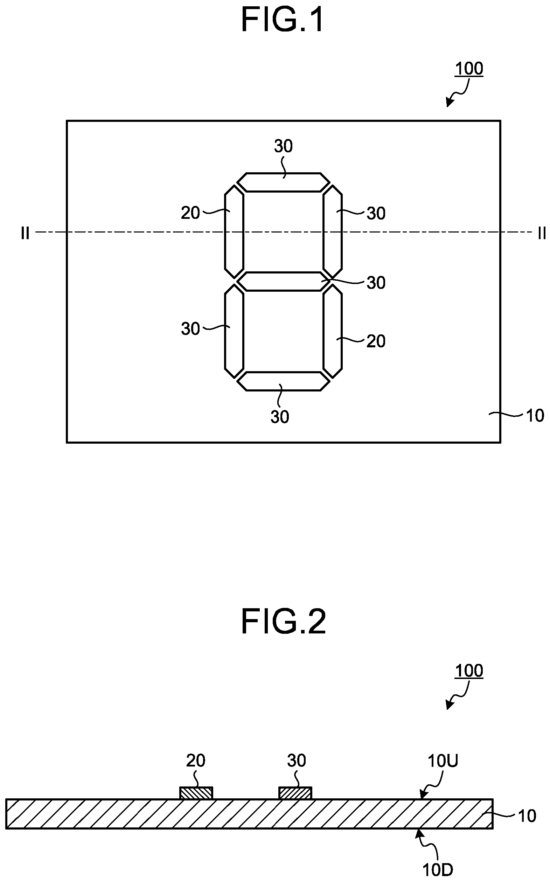

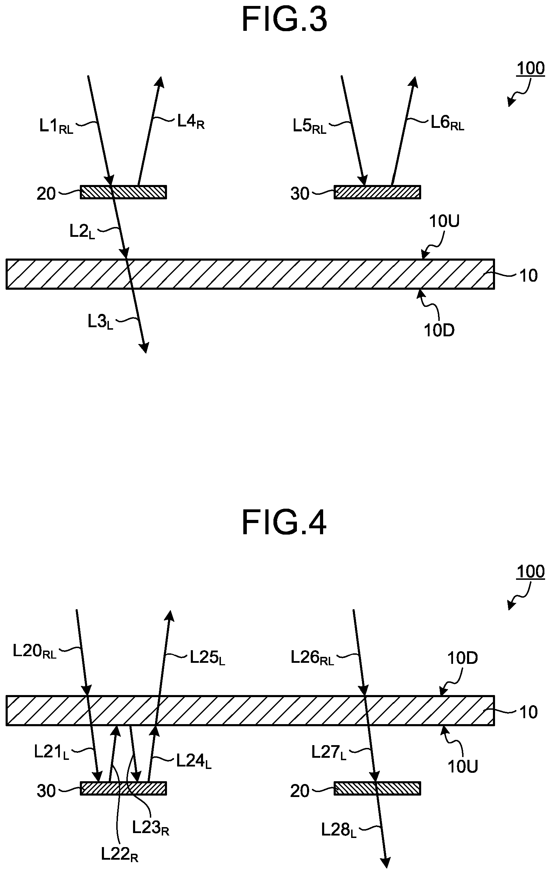

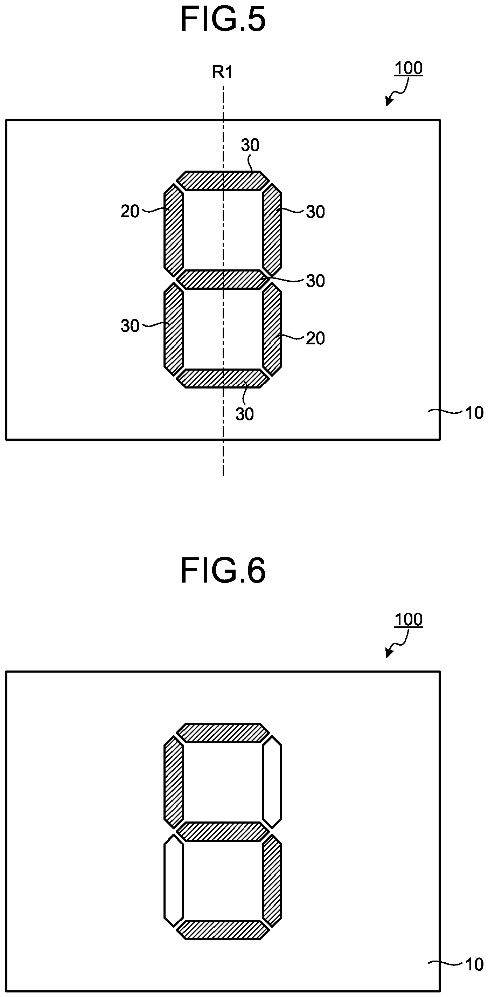

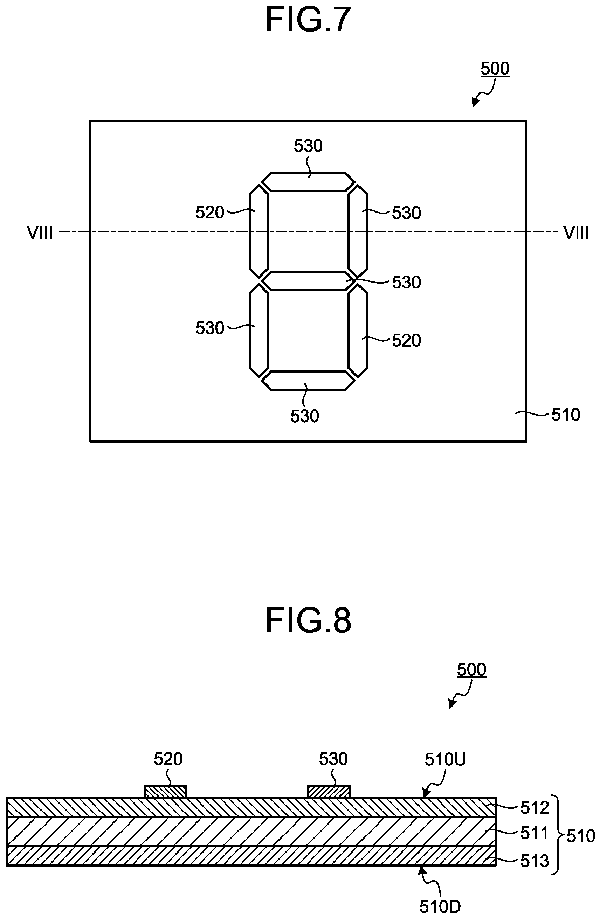

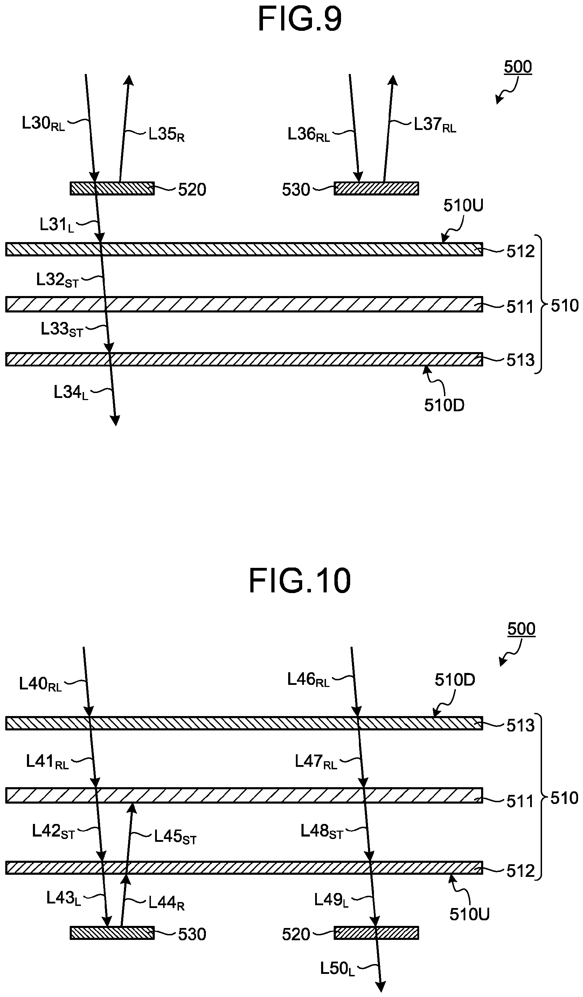

Hereinafter, the action of the authenticity determining member according to the embodiment of the present invention will be described referring to the drawings. FIG. 1 is a schematic plan view of the authenticity determining member according to the embodiment of the present invention as viewed in a thickness direction. FIG. 2 is a schematic cross-sectional view taken along line II-II in FIG. 1. FIG. 3 is an illustration view for the authenticity determining member according to the embodiment of the present invention when observed from a main surface side of the authenticity determining member. FIG. 4 is an illustration view for the authenticity determining member according to the embodiment of the present invention when observed from another main surface side of the authenticity determining member. FIG. 5 is a schematic view illustrating an image observed when the authenticity determining member according to the embodiment of the present invention is irradiated with unpolarized light. FIG. 6 is a schematic view illustrating an image observed when the authenticity determining member according to the embodiment of the present invention in FIG. 5 is flipped and irradiated with unpolarized light. FIG. 7 is a schematic plan view of an authenticity determining member according to Comparative Example as viewed in a thickness direction. FIG. 8 is a schematic cross-sectional view taken along line VIII-VIII in FIG. 7. FIG. 9 is an illustration view for the authenticity determining member according to Comparative Example when observed from a main surface side of the authenticity determining member. FIG. 10 is an illustration view for the authenticity determining member according to Comparative Example when observed from another main surface side of the authenticity determining member.

As shown in FIG. 1, an authenticity determining member 100 according to the embodiment of the present invention includes a substrate layer 10, a first print layer 20, and a second print layer 30. The substrate layer 10 is the resin layer having cholesteric regularity that has a function as a reflective circular polarizer that transmits counterclockwise circularly polarized light and reflects clockwise circularly polarized light. The first print layer 20 contains flakes of the resin layer having cholesteric regularity in the same twisting direction as that of the substrate layer 10. Like the substrate layer 10, the first print layer 20 has a circularly polarized light separation function of transmitting counterclockwise circularly polarized light and reflecting clockwise circularly polarized light. The second print layer 30 contains the metal pigment having no circularly polarized light separation function. The first print layer 20 and the second print layer 30 form a pattern as viewed in the thickness direction of the authenticity determining member 100 (a direction perpendicular to the drawing surface). In the embodiment, the first print layer 20 and the second print layer 30 form a pattern of numeral "8". As shown in FIG. 2, the first print layer 20 and the second print layer 30 are provided directly on a main surface 10U among the main surface 10U and a main surface 10D that are two main surfaces of the substrate layer 10. The first print layer 20 and the second print layer 30 are disposed on the main surface 10U such that they do not overlap with each other.

Referring to FIG. 3, an explanation will be presented in the following regarding the view of an image when unpolarized light is made incident from the main surface 10U side of the authenticity determining member 100, and the authenticity determining member 100 is observed from the main surface 10U side. When, as shown in FIG. 3, light L1_{RL} that is unpolarized light is made incident on the first print layer 20 from the main surface 10U side, the first print layer 20 transmits light L2_{L} that is counterclockwise circularly polarized light and reflects light L4_{R} that is clockwise circularly polarized light, as a result of the circularly polarized light separation function that the first print layer 20 has. Thus, reflected light by the first print layer 20 is visually recognized. The light L2_{L} is transmitted through the substrate layer 10 and becomes light L3_{L}.

When light L5_{RL} that is unpolarized light is made incident on the second print layer 30 from the main surface 10U side, the light L5_{RL} is reflected by the metal pigment contained in the second print layer 30. Thus, as reflected light by the second print layer 30, light L6_{RL} that is unpolarized light is visually recognized.

The reflected light by the first print layer 20 and the reflected light by the second print layer 30 are visually recognized. Thus, the numeral "8" is visually recognized as a first reflected image as shown in FIG. 5.

Subsequently, referring to FIG. 4, an explanation will be presented in the following regarding the view of an image when unpolarized light is made incident from the main surface 10D side of the authenticity determining member 100, and the authenticity determining member 100 is observed from the main surface 10D side. When, as shown in FIG. 4, light L26_{RL} that is unpolarized light is made incident from the main surface 10D side, the substrate layer 10 transmits light L27_{L} that is counterclockwise circularly polarized light, but does not transmit clockwise circularly polarized light, and the clockwise circularly polarized light does not reach the first print layer 20, as a result of the function of transmitting counterclockwise circularly polarized light and reflecting clockwise circularly polarized light that the substrate layer 10 has. Since the first print layer 20 has the aforementioned circularly polarized light separation function, the reflected light by the first print layer 20 is not visually recognized. The light L27_{L} that is counterclockwise circularly polarized light delivered by the irradiation of the first print layer 20 is transmitted through the first print layer 20 and becomes light L28_{L}.

When light L20_{RL} that is unpolarized light is made incident on the second print layer 30 from the main surface 10D side, the substrate layer 10 transmits light L21_{L} that is counterclockwise circularly polarized light. The transmitted light L21_{L} is reflected by the metal pigment contained in the second print layer 30. At that time, the rotation direction of the circularly polarized light is reversed by metal reflection. Thus, the reflected light by the second print layer 30 becomes light L22_{R} that is clockwise circularly polarized light. The light L22_{R} is reflected by the substrate layer 10, and light L23_{R} that is clockwise circularly polarized light is incident on the second print layer 30. The light L23_{R} is reflected by the second print layer 30, the rotation direction of the circularly polarized light is reversed, and the light L23_{R} becomes light L24_{L} that is counterclockwise circularly polarized light. Since the light L24_{L} reflected by the second print layer 30 is counterclockwise circularly polarized light, the light L24_{L} is transmitted through the substrate layer 10 and becomes light L25_{L} that is counterclockwise circularly polarized light. Therefore, the reflected light by the second print layer 30 is visually recognized as the light L25_{L}.

As described above, the reflected light by the first print layer 20 is not visually recognized, but the reflected light by the second print layer 30 is visually recognized. FIG. 6 is the view illustrating the view of the image observed when the authenticity determining member 100 in FIG. 5 is flipped with respect to an axis R1 shown in FIG. 5 as a rotation axis and irradiated with unpolarized light. As shown in FIG. 6, the reflected light by the first print layer 20 is not visually recognized, but the reflected light by the second print layer 30 is visually recognized. Therefore, a numeral "5" is visually recognized as a second reflected image.

As described above, the first reflected image observed when unpolarized light is made incident from the main surface 10U side is different from the second reflected image observed when unpolarized light is made incident from the other main surface 10D side in the authenticity determining member 100. Therefore, the existence of difference between the first reflected image and the second reflected image may be utilized as one criteria to determine that the authenticity determining member 100 is authentic.

In this embodiment, the substrate layer 10 that is the reflective circular polarizer is the resin layer having cholesteric regularity. In other embodiments, the substrate layer may be a reflective circular polarizer containing a reflective linear polarizer, a first λ/4 plate provided on one main surface of the reflective linear polarizer, and a second λ/4 plate provided on another main surface of the reflective linear polarizer.

Subsequently, an action of an authenticity determining member in which the substrate layer is not a reflective circular polarizer but an absorbing circular polarizer will be described for comparison with the action of the authenticity determining member according to the present invention.

As shown in FIG. 7, an authenticity determining member 500 includes a substrate layer 510, a first print layer 520, and a second print layer 530. The substrate layer 510 has a function as an absorbing circular polarizer that transmits counterclockwise circularly polarized light and absorbs clockwise circularly polarized light. The first print layer 520 has a circularly polarized light separation function of transmitting counterclockwise circularly polarized light and reflecting clockwise circularly polarized light. The second print layer 530 contains a metal pigment having no circularly polarized light separation function. The first print layer 520 and the second print layer 530 form a pattern as viewed in the thickness direction of the authenticity determining member 500 (the direction perpendicular to the drawing surface). In this example, the first print layer 520 and the second print layer 530 form a pattern of numeral **"8"** like the authenticity determining member 100. As shown in FIG. 8, the substrate layer 510 includes a phase difference layer 512 having a function as a λ/4 plate, a linear polarizer 511, and a phase difference layer 513 having a function as a λ/4 plate, which are stacked in this order. The slow axis of the phase difference layer 512, the absorption axis of the linear polarizer 511, and the slow axis of the phase difference layer 513 form such an angle that the transmitted light through the substrate layer 510 becomes counterclockwise circularly polarized light. As shown in FIG. 8, the first print layer 520 and the second print layer 530 are provided directly on a main surface 510U among the main surface 510U and a main surface 510D that are two main surfaces of the substrate layer 10. The first print layer 520 and the second print layer 530 are disposed on the main surface 510U so that they do not overlap with each other.

Referring to FIG. 9, an explanation will be presented in the following regarding the view of an image when unpolarized light is made incident from the main surface 510U side of the authenticity determining member 500, and the authenticity determining member 500 is observed from the main surface 510U side. When, as shown in FIG. 9, light L30_{RL} that is unpolarized light is made incident on the first print layer 520 from the main surface 510U side, the first print layer 520 transmits light L31_{L} that is counterclockwise circularly polarized light and reflects light L35_{R} that is clockwise circularly polarized light. Thus, the reflected light by the first print layer 520 is visually recognized. The light L31_{L} is transmitted through the phase difference layer 512 and becomes light L32_{ST} that is linearly polarized light, and the light L32_{ST} is transmitted through the linear polarizer 511. Light L33_{ST} that is linearly polarized light transmitted is then transmitted through the phase difference layer 513 and becomes light L34_{L} that is counterclockwise circularly polarized light.

When light L36_{RL} that is unpolarized light is made incident on the second print layer 530, the light L36_{RL} is reflected by the metal pigment contained in the second print layer 530. Thus, as the reflected light by the second print layer 530, light L37_{RL} that is unpolarized light is visually recognized.

The reflected light by the first print layer 520 and the reflected light by the second print layer 530 are visually recognized. Thus, the numeral "8" is visually recognized as a reflected image.

Subsequently, referring to FIG. 10, an explanation will be presented in the following regarding the view of an image when unpolarized light is made incident from the main surface 510D side of the authenticity determining member 500, and the authenticity determining member 500 is observed from the main surface 510D side. When, as shown in FIG. 10, light L46_{RL} that is unpolarized light is made incident from the main surface 510D side, the light L46_{RL} is transmitted through the phase difference layer 513. Of transmitted light L47_{RL} that is unpolarized light, linearly polarized light having a vibration direction parallel to the absorption axis of the linear polarizer 511 is absorbed, and light L48_{ST} alone that is linearly polarized light having a vibration direction perpendicular to the absorption axis is transmitted. The transmitted light L48_{ST} is transmitted through the phase difference layer 512 and becomes light L49_{L} that is counterclockwise circularly polarized light. The light L49_{L} is incident on the first print layer 520. However, since the light L49_{L} is counterclockwise circularly polarized light, the light L49_{L} is not reflected by the first print layer 520. Therefore, the reflected light by the first print layer 520 is not visually recognized. The light L49_{L} is transmitted through the first print layer 520 and becomes light L50_{L}.

Light L40_{RL} that is unpolarized light incidence from the main surface 510D side is passed through the phase difference layer 513 and becomes light L41_{RL} that is unpolarized light. A part of the light L41_{RL} is passed through the linear polarizer 511 and becomes light L42_{ST} that is linearly polarized light. The light L42_{ST} is transmitted through the phase difference layer 512 and becomes light L43_{L} that is counterclockwise circularly polarized light. The light L43_{L} is reflected by the metal pigment contained in the second print layer 530, the rotation direction of the circularly polarized light is reversed, and the light L43_{L} becomes light L44_{R} that is clockwise circularly polarized light. The light L44_{R} is transmitted through the phase difference layer 512 and is transformed to light L45_{ST} that is linearly polarized light. By the reflection by the second print layer 530, the rotation direction of the light L44_{R} that is the reflected light is reversed with respect to the light L43_{L} that is incident light. As a result, the light L45_{ST} is linearly polarized light having a vibration direction parallel to the absorption axis of the linear polarizer 511. Therefore, the light L45_{ST} is absorbed by the linear polarizer 511. Accordingly, the reflected light by the second print layer 530 is not visually recognized.

Unlike the authenticity determining member 100, during observation from the main surface 510D side, not only the reflected light by the first print layer 520 but also the reflected light by the second print layer 530 are not visually recognized.

In contrast, in both cases wherein the authenticity determining member 100 according to the embodiment of the present invention is observed from the main surface 10U and from the main surface 10D, the metallic-colored reflected light by the second print layer 30 can be visually recognized. Using the action, various patterns can be expressed on both surfaces including the front surface and the back surface of the authenticity determining member 100.

### (1.5. Use application of authenticity determining member)

The authenticity determining member is suitably used for determination of authenticity of an article whose authenticity is desired to be identified by attaching the authenticity determining member to the article and using different reflected images displayed on the front and back sides of the authenticity determining member. Examples of the article to determine authenticity may include articles such as tradable coupons, gift coupons, tickets, certificates, and security cards. The authenticity determining member may be used as the article itself. The authenticity determining member may also be used in a form of a label for determination of authenticity, or the like.

### (2. Method for determining authenticity of authenticity determining member)

The authenticity of the authenticity determining member according to an embodiment of the present invention may be determined by the aforementioned action.

The determination method using the authenticity determining member according to an embodiment of the present invention includes a step (1) of observing the authenticity determining member with unpolarized light being made incident from a main surface side thereof to obtain a first reflected image, a step (2) of observing the authenticity determining member with unpolarized light being made incident from the other main surface side thereof to obtain the second reflected image, and a step (3) of determining whether the first reflected imageis different from the second reflected image .

The step (1) and the step (2) are not usually performed at the same time. After the step (1) and the step (2), the step (3) is performed.

Different means that, in comparison of the first reflected image with the second reflected image , a part that is not present in one of the reflected images is found on the other image, and does not generally include a case where the first reflected image and the second reflected image are in a mirror-image relationship.

### Examples

Hereinafter, the present invention will be specifically described by illustrating Examples. However, the present invention is not limited to the Examples described below. The present invention may be optionally modified for implementation without departing from the scope of claims of the present invention and its equivalents.

In the following description, "%" and "part" representing quantity are on the basis of weight, unless otherwise specified. The operation described below was performed under the conditions of normal temperature and normal pressure, unless otherwise specified.

### (Example 1)

### (1-1. Preparation of cholesteric liquid crystal composition)

A cholesteric liquid crystal composition (solid content: 20% by weight) for forming a cholesteric resin layer was prepared by mixing "Paliocolor LC242" manufactured by BASF as a polymerizable liquid crystal compound, "Paliocolor LC756" manufactured by BASF as a chiral agent, "Irgacure OXE02" manufactured by BASF as a photopolymerization initiator, "Surflon S420" manufactured by AGC Seimi Chemical Co., Ltd. as a leveling agent, and methyl ethyl ketone (MEK) as a solvent in the ratio shown in Table 1.

The chemical structures of "Paliocolor LC242", "Paliocolor LC756", and "Irgacure OXE02" are shown below.

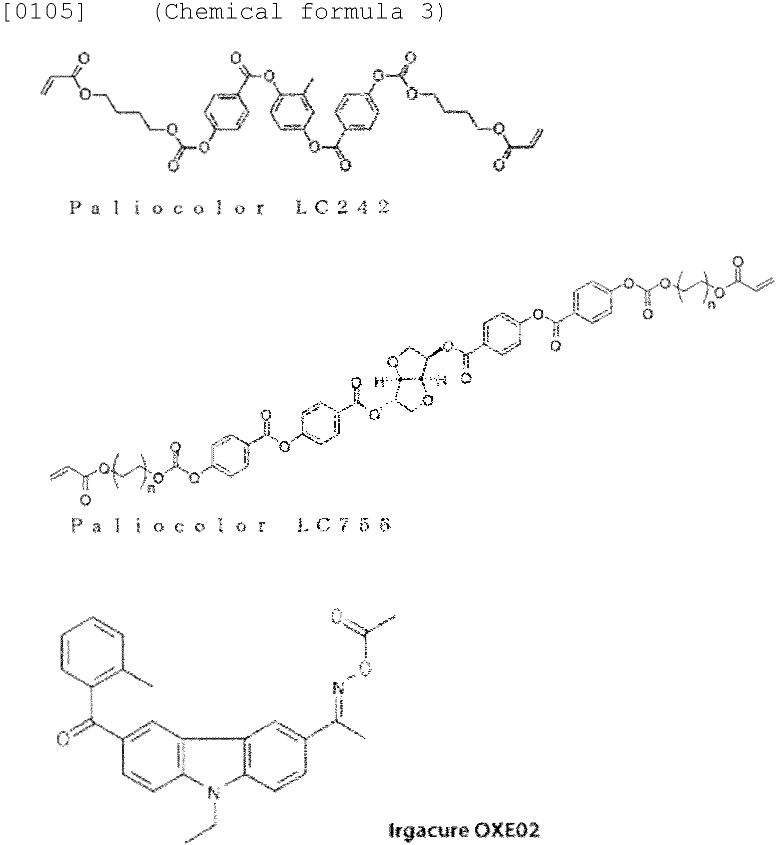

### Table 1

**Table 1**

| Name of material | Parts by weight |
|---|---|
| Pariocolor LC242 | 17.79 parts by weight |
| Paliocolor LC756 | 1.59 parts by weight |
| Surflon S-420 | 0.02 parts by weight |
| Irgacure OXE02 | 0.60 parts by weight |
| MEK | 80.00 parts by weight |
| total | 100 parts by weight |

### (1-2. Production of cholesteric resin layer)

The cholesteric liquid crystal composition prepared as described above was applied onto a cycloolefin polymer (COP) film using a wire bar #10 to form a coating film of the liquid crystal composition. The coating film of the liquid crystal composition was held at 140°C for two minutes for performing orientation treatment. The coating film was then subjected to a process of irradiation with weak ultraviolet light of 25 mJ/cm² (wavelength: 365 nm) and subsequent heating at 90°C for one minute. The coating film was then irradiated with ultraviolet light of 2000 mJ/cm² in a nitrogen atmosphere for curing. As a result, a film F having a circularly polarized light separation function in which a cholesteric resin layer with a thickness of 5 µm was formed on a PET film was produced. The light reflectance of the cholesteric resin layer was measured at a wavelength range of 380 nm to 830 nm by "V570" manufactured by JASCO Corporation. As a result, the reflectance at at least one wavelength in the wavelength range of 380 nm or longer and 830 nm or shorter was 40% or more. From the obtained reflectance spectrum, the wavelength range of the half of a maximum reflectance (half band width) of the reflection band whose reflectance was 35% or more and 50% or less was read, and the range was found to be 350 nm. The reflection of clockwise circularly polarized light by the cholesteric resin layer was confirmed by observation of the cholesteric resin layer through a clockwise circular polarizing plate. Herein, the clockwise circular polarizing plate has a function of absorbing counterclockwise circularly polarized light and transmitting clockwise circularly polarized light. Specifically, confirmation was performed by observing the light that was reflected by the cholesteric resin layer through the clockwise circular polarizing plate, and recognize the vision of the colored reflected light.

### (1-3. Production of flakes of cholesteric resin layer (resin pigment))

With reference to a method described in Example of Japanese Patent Application Laid-Open No. 2015-027743 A, as described below, the cholesteric resin layer was peeled from the film F to form flakes, and the flakes were used as a resin pigment.

A production device including a film feeding unit, a peeling unit, and a film collecting unit was prepared. The peeling unit includes a bar having a ridge portion of an acute angle, and a nozzle that is disposed directly downstream the ridge portion and can blow out air. The angle of the ridge portion of the bar was set such that the film F was folded at an angle θ of 30° to 60°. The ridge portion had a chamfered structure with R of 0.2 mm to 0.3 mm.

To the film feeding unit, the film F was placed in a direction whereby the film F was folded with the cholesteric resin layer, rather than the PET film, faced outward at the ridge portion of the bar. Then the film F was fed from the film feeding unit while applying a tensile force to the film F in a conveyance direction by the film collecting unit. At that time, the tensile force applied to the film was set to 80 N/m. From the nozzle, air was blown at a pressure of 0.5 MPa.

Stretching of the film F in the conveyance direction was began from the time point when the film F was fed from the film feeding unit. After that, the film F stretched at an elongation that was equal to or more than the tensile elongation at break of the cholesteric resin layer was folded back at the ridge portion of the bar, and a larger number of cracks were generated.

The film F was then conveyed to the nozzle, and air was sprayed from the nozzle. By this air, the cracked cholesteric resin layer was blown off to be peel pieces.

The obtained peel pieces of the cholesteric resin layer were collected by a collecting device. The PET film from which the cholesteric resin layer was peeled was wound into a roll and collected by the film collecting unit.

The collected peel pieces were ground into flakes of the cholesteric resin layer by a cutter mill, and the flakes were then passed through a sieve having an opening of 51 µm. The flakes of the cholesteric resin layer that were passed through the sieve were collected to form the resin pigment. The flakes of the resin layer constituting the resin pigment were produced from the cholesteric resin layer provided in the film F as a raw material. Therefore, the flakes had cholesteric regularity in the same twisting direction as that of the cholesteric resin layer that the film F had.

### (1-4. Preparation of ink containing resin pigment)

The resulting resin pigment was added to a thermosetting medium ("LOV (E)-800" manufactured by Seiko Advance Ltd.) in an amount of 8% by weight relative to the total amount of the ink to form a first print layer-forming ink 1.

### (1-5. Preparation of ink containing metal pigment)

Aluminum powder ("Standard No.60" manufactured by Horikin Hakuhun Kabushiki Kaisha) was added to a thermosetting medium ("LOV (E)-800" manufactured by Seiko Advance Ltd.) in an amount of 10% by weight relative to the total amount of the ink to form a second print layer-forming ink 2.

### (1-6. Production of Authentication Determination Member)

On the surface of the cholesteric resin layer of the film F as the substrate layer 10, the first print layer 20 and the second print layer 30 were formed by screen printing using the ink 1 and the ink 2, respectively, so as to have the pattern shown in FIG. 1, thereby producing the authenticity determination member 100.

### (1-7. Step (1))

The authenticity determining member 100 was placed on white paper with a surface (the main surface 10U), on which the first print layer 20 and the second print layer 30 were printed, disposed upward. The authenticity determining member 100 placed on the white paper was irradiated with unpolarized light from the main surface 10U side, and the reflected image was observed from the main surface 10U side. As a result, a numeral "8" was observed as shown in FIG. 5. The numeral "8" as the first reflected image observed was in a silver color.

### (1-8. Step (2))

The authenticity determining member 100 was flipped about the axis R1 shown in FIG. 5 as an axis, and then placed on white paper with another surface (the main surface 10D), on which the first print layer 20 and the second print layer 30 were not printed, disposed upward. The authenticity determining member 100 was irradiated with unpolarized light from the main surface 10D side, and the reflected image was observed from the main surface 10D side. As a result, the reflected light by the first print layer 20 was not observed, the reflected light by the second print layer 30 was observed, and a numeral "5" was observed as shown in FIG. 6. The numeral "5" as the second reflected image observed was in a silver color.

### (1-9. Step (3))

The numeral "8" as the first reflected image and the numeral "5" as the second reflected image are obviously different and are not in a mirror-image relationship.

### (Example 2)

### (2-6. Production of authenticity determining member)

As the substrate layer, a reflective circular polarizer including a reflective linear polarizer was prepared. In this reflective circular polarizer, two phase difference layers ("ZEONOR film ZD series" available from ZEON Corporation) functioning as a λ/4 plate were stacked on both surfaces of a reflective linear polarizer ("DBEF" available from 3M Company). In the circular polarizing plate, the two phase difference layers were disposed on both surfaces of the reflective linear polarizer such that transmitted light became counterclockwise circularly polarized light.

Onto a surface of the substrate layer, a triangular pattern as the first print layer was printed with the ink 1 by a screen printing method, and a triangular outline pattern as the second print layer was printed with the ink 2 by a screen printing method. Thus, the authenticity determining member was produced.

The pattern printed with the ink 2 was along the outline of the triangular pattern printed with the ink 1. The ink 1 and the ink 2 were prepared in the same manner as in Example 1.

### (2-7. Step (1))

The authenticity determining member was placed on white paper with a surface (a first main surface), on which a first print layer and a second print layer were printed, disposed upward. The authenticity determining member placed on the white paper was irradiated with unpolarized light from the first main surface side, and the reflected image was observed from the first main surface side. As a result, the reflected light by the first print layer and the reflective light by the second print layer were observed, and a triangle was observed. The observed triangle as the first reflected image was in a silver color.

### (2-8. Step (2))

Subsequently, the authenticity determining member was flipped and placed on white paper with another surface (a second main surface), on which the first print layer and the second print layer were not printed, disposed upward. The authenticity determining member was irradiated with unpolarized light from the second main surface side, and the reflected image was observed from the second main surface side. As a result, the reflected light by the first print layer (triangular pattern) was not observed, the reflected light by the second print layer (triangular outline pattern) was observed, and the triangular outline alone was thus observed. The triangular outline as the second reflected image observed was in a silver color.

### (2-9. Step (3))

The triangle as the first reflected image and the triangular outline as the second reflected image are obviously different and are not in a mirror-image relationship.

The triangular outline as the second reflected image was not in a black but in a silver color. The color of the triangular outline was the same as the color of the triangular outline as the first reflected image.

### (Comparative Example 1)

### (C1-6. Production of authenticity determining member)

An absorbing circular polarizing plate was prepared as the substrate layer 510. In this circular polarizing plate, a phase difference layer 512 and a phase difference layer 513 (both "ZEONOR film ZD series" manufactured by ZEON Corporation) functioning as a λ/4 plate were stacked on both surfaces of an absorbing linear polarizer 511 ("HLC2-5618S" manufactured by Sanritz Co., Ltd.). In this circular polarizing plate, the phase difference layer 512, the phase difference layer 513, and the linear polarizer 511 were arranged so that the transmitted light becomes counterclockwise circularly polarized light.

On the surface of the substrate layer 510 on the side of the phase difference layer 512, the first print layer 520 and the second print layer 530 were formed by a screen printing method using the ink 1 and the ink 2, respectively, so as to have the pattern shown in FIG. 7, thereby producing the authenticity determining member 500. The ink 1 and the ink 2 were prepared in the same manner as that in Example 1.

### (C1-7. step (1))

The authenticity determining member 500 was then placed on white paper with a surface (a main surface 510U), on which the first print layer 520 and the second print layer 530 were printed, disposed upward. The authenticity determining member 500 placed on the white paper was irradiated with unpolarized light from the main surface 510U side, and a reflected image was observed from the main surface 510U side. As a result, the number "8" was observed. The number "8" as the first reflected image observed was in a silver color.

### (C1-8. step (2))

The authenticity determining member 500 was then flipped about the longitudinal direction of the paper of FIG. 7 as an axis, and then placed on white paper with another surface (the main surface 510D), on which the first print layer 520 and the second print layer 530 were not printed, disposed upward. The authenticity determining member 500 was irradiated with unpolarized light from the main surface 510D side, and the reflected image was observed from the main surface 510D side. As a result, no silver reflected image was observed, and only a black number "5" was observed.

### (C1-9. step (3))

As described above, the first reflected image was obtained, and the silver second reflected image was not obtained.

### Reference Sign List

- 10: substrate layer

- 10U: main surface
- 10D: main surface
- 100: authenticity determining member
- 20: first print layer
- 30: second print layer
- 500: authenticity determining member
- 510: substrate layer
- 510U: main surface
- 510D: main surface
- 511: linear polarizer
- 512: phase difference layer
- 513: phase difference layer
- 520: first print layer
- 530: second print layer

## Claims

1. An authenticity determining member (100, 500) comprising:
a substrate layer (10, 510) that is a reflective circular polarizer;
a first print layer (20, 520) that contains a resin pigment including flakes of a resin layer A1 having cholesteric regularity, the first print layer (20, 520) being provided on the substrate layer (10, 510); and
a second print layer (30, 530) that contains a metal pigment having no circularly polarized light separation function, the second print layer (30, 530) being provided on the substrate layer (10, 510).

2. The authenticity determining member (100, 500) according to claim 1, wherein a first reflected image observed when unpolarized light is made incident from a main surface side of the authenticity determining member (100, 500) and a second reflected image observed when unpolarized light is made incident from the other main surface side of the authenticity determining member (100, 500) are different from each other.

3. The authenticity determining member (100, 500) according to claim 1 or 2, wherein a reflectance of the resin layer A1 at at least one wavelength in a visible wavelength band is 40% or more, and a half band width of a reflection band where the reflectance of the resin layer A1 is 35% or more and 50% or less is 350 nm or more.

4. The authenticity determining member (100, 500) according to any one of claims 1 to 3, wherein the substrate layer (10, 510) is a resin layer A2 having cholesteric regularity, and the resin layer A1 and the resin layer A2 have cholesteric regularity in the same twisting direction.

5. The authenticity determining member (100, 500) according to claim 4, wherein a reflectance of the resin layer A2 at at least one wavelength in a visible wavelength band is 40% or more, and a half band width of a reflection band where the reflectance of the resin layer A2 is 35% or more and 50% or less is 350 nm or more.

6. The authenticity determining member (100, 500) according to claim 1 or 2, wherein the substrate layer (10, 510) is a reflective circular polarizer that includes a reflective linear polarizer (511), a first λ/4 plate provided on a main surface of the reflective linear polarizer (511), and a second λ/4 plate provided on the other main surface of the reflective linear polarizer (511).

7. A method for determining authenticity of an authenticity determining member (100, 500) comprising:
a step (1) of observing the authenticity determining member (100, 500) according to any one of claims 1 to 6 with unpolarized light being made incident from a main surface side thereof, to obtain a first reflected image;
a step (2) of observing the authenticity determining member (100, 500) with unpolarized light being made incident from the other main surface side thereof, to obtain a second reflected image; and
a step (3) of determining whether the first reflected image is different from the second reflected image.

## Patentansprüche

1. Echtheitsbestimmungselement (100, 500), umfassend:
eine Substratschicht (10, 510), die ein reflektierender Zirkularpolarisator ist;
eine erste Druckschicht (20, 520), die ein Harzpigment mit Flocken einer Harzschicht A1 mit cholesterischer Regelmäßigkeit enthält, wobei die erste Druckschicht (20, 520) auf der Substratschicht (10, 510) vorgesehen ist; und
eine zweite Druckschicht (30, 530), die ein Metallpigment enthält, das keine Trennfunktion für zirkular polarisiertes Licht hat, wobei die zweite Druckschicht (30, 530) auf der Substratschicht (10, 510) vorgesehen ist.

2. Echtheitsbestimmungselement (100, 500) nach Anspruch 1, wobei ein erstes reflektiertes Bild, das beobachtet wird, wenn unpolarisiertes Licht von einer Hauptoberflächenseite des Echtheitsbestimmungselements (100, 500) einfällt, und ein zweites reflektiertes Bild, das beobachtet wird, wenn unpolarisiertes Licht von der anderen Hauptoberflächenseite des Echtheitsbestimmungselements (100, 500) einfällt, voneinander verschieden sind.

3. Echtheitsbestimmungselement (100, 500) nach Anspruch 1 oder 2, wobei das Reflexionsvermögen der Harzschicht A1 bei mindestens einer Wellenlänge in einem sichtbaren Wellenlängenband 40 % oder mehr beträgt, und die halbe Bandbreite eines Reflexionsbandes, in dem das Reflexionsvermögen der Harzschicht A1 35 % oder mehr und 50 % oder weniger beträgt, 350 nm oder mehr beträgt.

4. Echtheitsbestimmungselement (100, 500) nach einem der Ansprüche 1 bis 3, wobei die Substratschicht (10, 510) eine Harzschicht A2 mit cholesterischer Regelmäßigkeit ist, und die Harzschicht A1 und die Harzschicht A2 cholesterische Regelmäßigkeit in der gleichen Verdrehungsrichtung aufweisen.

5. Echtheitsbestimmungselement (100, 500) nach Anspruch 4, wobei das Reflexionsvermögen der Harzschicht A2 bei mindestens einer Wellenlänge in einem sichtbaren Wellenlängenband 40 % oder mehr beträgt, und die halbe Bandbreite eines Reflexionsbandes, in dem das Reflexionsvermögen der Harzschicht A2 35 % oder mehr und 50 % oder weniger beträgt, 350 nm oder mehr beträgt.

6. Echtheitsbestimmungselement (100, 500) nach Anspruch 1 oder 2, wobei die Substratschicht (10, 510) ein reflektierender Zirkularpolarisator ist, der einen reflektierenden linearen Polarisator (511), eine erste λ/4 Platte, die auf einer Hauptoberfläche des reflektierenden linearen Polarisators (511) vorgesehen ist, und eine zweite λ/4 Platte, die auf der anderen Hauptoberfläche des reflektierenden linearen Polarisators (511) vorgesehen ist, umfasst.

7. Verfahren zur Bestimmung der Echtheit eines Echtheitsbestimmungselements (100, 500), umfassend:
einen Schritt (1) des Beobachtens des Echtheitsbestimmungselements (100, 500) nach einem der Ansprüche 1 bis 6 mit unpolarisiertem Licht, das von einer Hauptoberflächenseite desselben einfällt, um ein erstes reflektiertes Bild zu erhalten;
einen Schritt (2) des Beobachtens des Echtheitsbestimmungselements (100, 500) mit unpolarisiertem Licht, das von der anderen Seite seiner Hauptoberfläche einfällt, um ein zweites reflektiertes Bild zu erhalten; und
einen Schritt (3) zur Bestimmung, ob sich das erste reflektierte Bild von dem zweiten reflektierten Bild unterscheidet.

## Revendications

1. Élément de détermination d'authenticité (100, 500) comprenant :
une couche de substrat (10, 510) qui est un polariseur circulaire réfléchissant ;
une première couche d'impression (20, 520) qui contient un pigment de résine comprenant des paillettes d'une couche de résine A1 ayant une régularité cholestérique, la première couche d'impression (20, 520) étant prévue sur la couche de substrat (10, 510) ; et
une deuxième couche d'impression (30, 530) qui contient un pigment de métal n'ayant aucune fonction de séparation de la lumière polarisée de manière circulaire, la deuxième couche d'impression (30, 530) étant prévue sur la couche de substrat (10, 510).

2. Élément de détermination d'authenticité (100, 500) selon la revendication 1, dans lequel une première image réfléchie observée lorsqu'une lumière non polarisée est rendue incidente par une surface principale de l'élément de détermination d'authenticité (100, 500) et une deuxième image réfléchie observée lorsqu'une lumière non polarisée est rendue incidente par l'autre surface principale de l'élément de détermination d'authenticité (100, 500) sont différentes l'une de l'autre.

3. Élément de détermination d'authenticité (100, 500) selon la revendication 1 ou 2, dans lequel une réflectance de la couche de résine A1 à au moins une longueur d'onde sur une bande de longueurs d'ondes visibles est de 40 % ou plus, et une demi largeur de bande d'une bande de réflexion sur laquelle la réflectance de la couche de résine A1 est de 35 % ou plus et de 50 % ou moins est de 350 nm ou plus.

4. Élément de détermination d'authenticité (100, 500) selon l'une quelconque des revendications 1 à 3, dans lequel la couche de substrat (10, 510) est une couche de résine A2 ayant une régularité cholestérique, et la couche de résine A1 et la couche de résine A2 présentent une régularité cholestérique dans la même direction de torsion.

5. Élément de détermination d'authenticité (100, 500) selon la revendication 4, dans lequel une réflectance de la couche de résine A2 à au moins une longueur d'onde sur une bande de longueurs d'ondes visibles est de 40 % ou plus, et une demi largeur de bande d'une bande de réflexion sur laquelle la réflectance de la couche de résine A2 est de 35 % ou plus et de 50 % ou moins est de 350 nm ou plus.

6. Élément de détermination d'authenticité (100, 500) selon la revendication 1 ou 2, dans lequel la couche de substrat (10, 510) est un polariseur circulaire réfléchissant qui comprend un polariseur linéaire réfléchissant (511), une première plaque λ/4 prévue sur une surface principale du polariseur linéaire réfléchissant (511), et une deuxième plaque λ/4 prévue sur l'autre surface principale du polariseur linéaire réfléchissant (511).

7. Procédé de détermination d'authenticité d'un élément de détermination d'authenticité (100, 500) comprenant :
une étape (1) d'observation de l'élément de détermination d'authenticité (100, 500) selon l'une quelconque des revendications 1 à 6 avec une lumière non polarisée qui est rendue incidente par une surface principale de celui-ci, afin d'obtenir une première image réfléchie ;
une étape (2) d'observation de l'élément de détermination d'authenticité (100, 500) avec une lumière non polarisée rendue incidente par l'autre surface principale de celui-ci, afin d'obtenir une deuxième image réfléchie ; et
une étape (3) de détermination du fait que la première image réfléchie soit différente de la deuxième image réfléchie.
